# EUROPEAN PATENT SPECIFICATION

(11) **EP 2 544 467 B1**
(45) Date of publication and mention of the grant of the patent: **19.12.2018**
(21) Application number: 12174726.5
(22) Date of filing: 03.07.2012
(51) Int. Cl.: H04W 4/70, H04W 76/10

(54) **Triggering with time indicator**
Auslösung mit Zeitanzeiger
Déclenchement avec indicateur temporel

(30) Priority: 04.07.2011 EP 11172530
(43) Date of publication of application: 09.01.2013
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: Norp, Antonius, 2584 EN The Hague (NL); Busropan, Bryan Jerrel, Den Haag 2492 MR (NL)
(74) Representative: Wuyts, Koenraad Maria

(56) References cited:
- CATT: "Access Time Period Update for Time Controlled MTC Feature", 3GPP DRAFT; S2-110717, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Salt Lake City; 20110221, 15 February 2011 (2011-02-15), XP050523900,
- "3rd Generation Partnership Project; Technical Specification Group Services and System Aspects; Service requirements for Machine-Type Communications (MTC); Stage 1 (Release 11)", 3GPP STANDARD; 3GPP TS 22.368, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V11.1.0, 1 April 2011 (2011-04-01), pages 1-23, XP050476757,
- "3rd Generation Partnership Project; Technical Specification Group Services and System Aspects; System Improvements for Machine-Type Communications; (Release 11)", 3GPP STANDARD; 3GPP TR 23.888, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.2.0, 27 April 2011 (2011-04-27), pages 1-111, XP050477581,
- ETRI: "Impact and Evaluation of Randomized Triggering of Time-controlled Operations (6.21)", 3GPP DRAFT; S2-103571 IMPACT AND EVALUATION OF RANDOMIZED TRIGGERING OF TIME-CONTROLLED OPERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Brunstad; 20100903, 24 August 2010 (2010-08-24), XP050458601,
- KPN: "Discussion on SIMTC Prioritisation", 3GPP DRAFT; S1-110131, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Nashville, Tennessee, USA; 20110214, 7 February 2011 (2011-02-07), XP050514501,

## Description

### FIELD OF THE INVENTION

Generally, the invention relates to the field of data communication. More specifically, the invention relates to the field of data communication between a terminal and an application server, for example for machine-to-machine (M2M) communication.

### BACKGROUND OF THE INVENTION

In existing data transfer environments, devices (also called "terminals") are sometimes required to transmit data to servers over the network, and vice versa. The establishment of data connections in fixed and mobile networks is, generally, device-originated. For example, Packet Data Protocol (PDP) context, which represents one type of data connection in GSM and UMTS networks, is set up by user terminals. Also most IP middle boxes, like firewalls and Network Address Translators, rely on initiation of a data session by the device.

Such devices may be applied in the field of machine-to-machine (M2M) communication as currently being standardized in 3GPP (see e.g. TS 22.368). While in many M2M applications it is sufficient that the M2M device initiates establishment of a communication path between the M2M device and the M2M server, there are also applications where the M2M server is required to be able to initiate the communication. 3GPP TR 23.888; TSG Services and System Aspects; System Improvements for Machine-Type Communications; (Release 11) V1.2.0 gives requirements for the MTC feature Device Trigger. For applications where normally the MTC Devices initiate communications, there may occasionally be a need for the MTC Server to poll data from MTC devices. For MTC Devices that are not continuously attached to the network or that have no always-on PDP/PDN connection it is beneficial to trigger MCT Devices to attach and/or establish a PDP/PDN connection based on a trigger indication from the MTC server.

An example of an M2M server initiating communication with the device is a smart electricity metering application. Normally, the meter may report meter readings at the end of every month. But when e.g. a customer changes to a different electricity provider, the M2M server needs to be able to trigger the meter to request the meter readings at the specific end-of-contract date.

To set up a connection from the server side, the server needs to inform the device that the device should set up a connection. This process is called triggering. There are different methods of triggering which all have in common the fact that the trigger merely provides a request to the device to set up a connection to a server, possibly indicating an address of the server (e.g. APN, IP address or FQDN), if the address of the server for the data connection that the device has to set up was not pre-configured in the terminal. In response to the trigger message, the device will start setting up a data connection to the server.

### SUMMARY OF THE INVENTION

It is an object of the invention to provide improved methods and systems for establishing a server-initiated communication path between a terminal and a server.

To that end, a method for triggering at least one terminal to establish a communication path between the terminal and a server is disclosed. The method includes transmitting a trigger message to the terminal, the trigger message including timing information indicating when the communication path between the at least one terminal and the server is to be established.

The present invention is based on the recognition that, until now, the server had no influence on the timing of when the terminal should set up a communication path to the server. Once the server transmitted the trigger message to the terminal, it was up to the terminal to decide when the connection will be set up. Such a configuration could become especially problematic when a batch of terminals would be triggered all at once. Because each of the terminals typically does not have information about what the other terminals are doing, a situation could occur that all the terminals that were triggered at once start setting up connections to the server simultaneously, thereby providing an excessive load on system's processing and communications' resources. The present invention helps mitigate or avoid this situation by including timing information in a trigger message provided to the terminal, the timing information specifying when the terminal should establish the connection to the server. Providing such timing information to the terminal allows the terminal to share with the server at least some of the control over when the connection is set up. As a result, the server is able to manage when different terminals set up their connections in response to the trigger messages. Such a centralized management of the different terminals within the system makes the system more efficient since the server typically has a much broader overview of what is happening in the system (e.g. the server has an overview on how many terminals were triggered at what time and what else is happening in the system). By inserting the timing information in the trigger messages, the server is able to utilize it's knowledge to control the timing of individual terminals setting up their connections. For example, when a large number of terminals were triggered at once, the server would be able to spread the occurrences of individual terminals setting up their connection over time.

The centralized management also reduces the potential for conflicts between the different terminals within the system.

Alternatively, the functionality described above could be implemented not in the server but in some intermediate network node (e.g. a network gateway). As long as the timing information as to when the communication path between the terminal and the server should be established is provided to the terminal by some entity that has a broader overview of the system rather than being decided on exclusively by the terminal, the overall system benefits.

As used herein, the term "communication path," in context of a terminal setting up a communication path to a server, refers to a path or a channel for communicating data (typically, user data) between the terminal and the server, at least part of which includes at least one data connection, typically between the terminal and some intermediate network node such as a network gateway, over which the terminal and the network gateway can exchange data according to one or more protocols such as e.g. PDP context or UMTS bearer described in 3GPP TS 23.060 or EPS bearer described in 3GPP TS 23.401. Persons skilled in the art will recognize that the term "network gateway" refers to an intermediate network node adapted to function as a gateway between a mobile network and an external packet data network such as e.g. internet or corporate packet data network. In existing GPRS/UMTS networks, the Gateway GPRS Support Node (GGSN) acts as the network gateway, while in LTE network, the PDN Gateway (P-GW) node is the network gateway.

The disclosed solution is, although not being limited to this field, especially advantageous for M2M communications because M2M communications typically involves hundreds, thousands or millions of terminals that may need to set up communication paths with a server. Although the relationship of the number of terminals to the number of servers with which these terminals may set up communication is not always N:1, as a single terminal may communicate with more than one server, the number of terminals, typically, is still significantly larger than the number of servers. Consequently, any single server would still benefit from having control of the timing as to when the various terminals set up communication paths to this server.

An example of M2M communications involves collecting information by a server from e.g. smart electricity meters at the homes of a large customer base. Other examples include surveillance systems, sensors, etc. that can be equipped with communication modules that may support various types of advanced data connections to a server. Also, mobile navigation terminals and payment terminals are examples of M2M applications. The presented solution provides for efficient server-based initiation of establishing a communication path between the terminal and the server for such applications.

In various embodiments, timing information included in a trigger message could include one or more of a time delay, a time window, and an instruction for the terminal to randomly select time for establishing the communication path between the terminal and the server. Other examples of information which could be indicative of the time when the communication path should be established could be envisioned and are within the scope of the present invention.

In an embodiment, the trigger message may be transmitted to a plurality of terminals, e.g. using group addressing or by broadcasting the trigger message over a plurality of base stations, the terminals being located in the coverage area of these base stations.

As described above, the communication path established between the terminal and the server may include at least one data connection, e.g. between the terminal and a network gateway, set up according to a set of parameters, depending on what type of communication is required between the terminal and the server. In an embodiment, the trigger message may further include connection information indicating a first type of the data connection in such a communication path between the terminal and the server.

The set of parameters, commonly referred to in the art as "QoS parameters" or "QoS profile," include parameters such as e.g. maximum bitrate, guaranteed bitrate, allocation set up, time out limit, and queue configuration. Some examples of the types of data connections include a best effort connection, a conversational connection, or a streaming connection. For different types of data connection, different sets of QoS parameters are required. For example, a conversational data connection may have strict requirements as to the delay and jitter in order to enable voice communication, while in a streaming connection the delay may be not so important.

Thus, the data connection between the terminal and the network gateway may be viewed as a "tunnel" set up between the terminal and the gateway. When the server (or some other entity outside of the tunnel, i.e. in the external data packet network) then needs to send an IP packet to the terminal, the server would use an IP address that is routed to the network gateway. From there, the IP packet is "tunnelled" through the data connection, to the terminal. Vice versa, when routing IP packets from the terminal to entities in the external network, the IP packets are "tunnelled" through the data connection from the terminal to the network gateway without the need to know IP addresses of intermediate nodes in the tunnel. The overall communication path between the terminal and the server may include one or more of such "tunnels." Then, between the network gateway and the server, a conventional IP routing of the Packet Data Network may be used.

Of course, embodiments are possible where the entire communication path between the terminal and the server may be a "tunnel" in that the entire communication path may need to be set up according to some set of parameters defining the type of data connection (i.e., the "at least one data connection" recited in claim 1 is actually the entire communication path between the terminal and the server). Also embodiments are possible where there is a concatenation of tunnels, e.g. one tunnel from the terminal to the network gateway and another tunnel from the gateway to the server. In such embodiments, QoS parameters in both tunnels may either be derived from same QoS indication or there may be different QoS indications. In one particular implementation, the tunnel between the network gateway and the server (and the associated QoS parameters) would not necessarily be set up by providing indication of the type of this tunnel in a trigger message. All of such embodiments are also included within the scope of the present invention and it is understood that a person skilled in the art would recognize what set of parameters (i.e., not necessarily the QoS parameters described above) would be the most appropriate in specifying the type(s) of such data connection(s).

Providing information to the terminal as to what type of connection the terminal should establish in the trigger message, i.e. before the terminal sets up the communication path including that data connection, avoids the terminal setting up a wrong type of data connection and allows significantly decreasing the number of messages exchanged between the server and the terminal. As a result, processing resources of the system may be preserved and inefficient bandwidth usage may be reduced.

Allowing the server to influence what kind of data connection the terminal will set up will become more and more important as the technology and the various applications develop, where inherently more versatile types of data connections would be required and supported by the terminals. For example, a video surveillance application would need bearers that have a suitable QoS for a video stream.

In various embodiments, the connection information could include e.g. part or all of a QoS profile or a QoS Class Identifier (QCI). The QCI could be in the form of a number that indicates which set of QoS parameters should be used for setting up a data connection. For example, a QCI equal to 1 may imply all QoS parameters needed for a conversational type of data connection. An advantage of using QCI is that it is much smaller than the QoS profile and, therefore, is much easier to transport in a trigger message. The QCI is particularly advantageous for applications where the trigger message is sent over a broadcast channel. Of course, other examples of information which could be indicative of the type of connection (i.e. of the range of QoS parameters of the requested data connection or whether a Circuit Switched or Packet Switched connection is used) could be envisioned and are within the scope of the present invention.

In other embodiments, a server and a terminal for use in the above methods are also disclosed.

Still further, an intermediate network node configured for use in the above methods and/or with the above terminal is disclosed. Such an intermediate network node could be communicatively connected to the terminal and the server, either directly or via other intermediate nodes, and the trigger message generated at the server could be sent to the intermediate network node before being transmitted by the node to the terminal. Such an intermediate network node could be a network gateway for communicating user data between the terminal and the server, such as e.g. GGSN or P-GW nodes described above, or it could be a network gateway for communicating control data, such as e.g. a machine-type communication gateway (MTC GW), described in greater detail below.

In the embodiments where the server is configured to include the connection information in the trigger message, the intermediate network node may be configured to determine whether the first type of data connection is supported by the terminal and/or allowed for the terminal. Upon positive determination, the intermediate network node may be configured to transmit the trigger message further, to the terminal. Upon negative determination, the intermediate network node may be configured to update the trigger message by replacing the information indicating the first type of data connection with information indicating a second type of data connection. Alternatively, upon negative determination, the intermediate network node may be configured to stop the transmission of the trigger message to the terminal, possibly informing the server to that effect. Such functionality could ensure that trigger messages provided to the terminal include requests for only the type of data connection that is actually supported by and/or allowed for the terminal, according e.g. to terminal's subscription.

In the embodiments where the server may be a server configured to send a trigger message without including timing information according to the present invention, the intermediate network node may be configured to implement the methods described herein by adding the timing information and, optionally, the connection information to the trigger message received from the server. This could be beneficial because the intermediate network node could be the entity that has information as to when the data connection should be established and/or what types of data connections are supported by and allowed for the terminal, according e.g. to terminal's subscription.

In various embodiments, more than one intermediate network node may be used to transmit trigger messages. For example, in one embodiment, a trigger message may first be transmitted from a server to a first intermediate network node, such as e.g. a control plane gateway, and then transmitted from the first intermediate network node to a second intermediate network note, such as e.g. a user plane gateway, before being transmitted to the terminal. Such embodiments could be advantageous in case an earlier established data connection can be used to transport the trigger message. Furthermore, it may enable entities (e.g. SGSN, S-GW, MME, GGSN, P-GW) involved in the subsequent set up of the data connection to already prepare on the basis of information in the trigger message.

Also, the present disclosure relates to a computer program with portions (possibly distributed) for performing the various functions described herein, to a data carrier for such software portions and to a telecommunications system comprising at least a server and a terminal as described above.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 is a schematic illustration of a 4G telecommunications network connecting terminals to an application server;
FIGS. 2A-2F are schematic illustrations of providing a trigger message for establishing a communication path between a server and a terminal according to various embodiments of the present invention;
FIG. 3 provides an exemplary illustration of how various trigger messages may be transmitted to a terminal via a control plane gateway, according to embodiments of the present invention.
FIGS. 4-8 provide schematic illustrations of various triggering mechanisms suitable for implementing embodiments of the present invention.

### DETAILED DESCRIPTION OF THE DRAWINGS

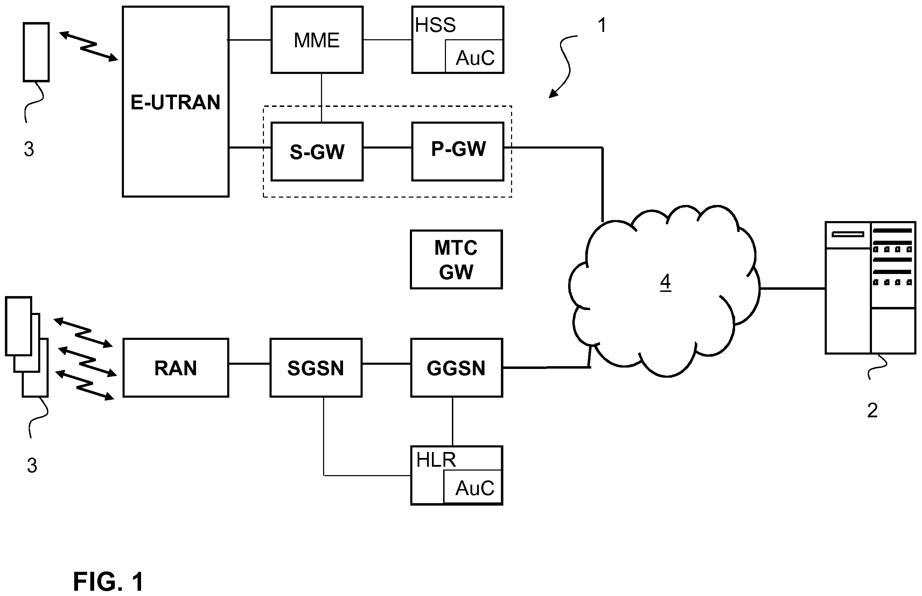

FIG. 1 shows a schematic illustration of a telecommunications network 1. The telecommunications network 1 allows data sessions between a server 2 and a terminal 3 over a data network 4, wherein access of the terminal to the telecommunications network 1 is wireless.

In the telecommunications network of FIG. 1, three generations of telecommunications networks are schematically depicted together for purposes of brevity. A more detailed description of the architecture and overview can be found in 3GPP TS 23.002 which is included in the present application by reference in its entirety.

The lower branch of FIG. 1 represents a GPRS or UMTS telecommunications network comprising a GGSN, a Serving GPRS Support Node (SGSN) and a Radio Access Network (RAN). For a GSM/EDGE radio access network (GERAN), the RAN comprises a Base Station Controller (BSC) connected to a plurality of Base Station Transceivers (BTSs), both not shown. For a UMTS radio access network (UTRAN), the RAN comprises a Radio Network Controller (RNC) connected to a plurality of NodeBs, also not shown. The GGSN and the SGSN are conventionally connected to a Home Location Register (HLR) that contains subscription information of the terminals 3. In the figure, the HLR is combined with an authentication centre (AuC) for authenticating terminals 3 in the network.

The upper branch in FIG. 1 represents a next generation telecommunications network, commonly indicated as Long Term Evolution (LTE) or Evolved Packet System (EPS). Such a network comprises a P-GW and a Serving Gateway (S-GW). The E-UTRAN of the LTE network comprises evolved NodeBs (eNodeBs or eNBs) providing wireless access for a terminal 3 that is connected to the S-GW via a packet network. The S-GW is connected to a Home Subscriber Server HSS and a Mobility Management Entity MME for signalling purposes. The HSS includes a subscription profile repository and an authentication centre (AuC). Further information of the general architecture of an LTE network can be found in 3GPP TS 23.401.

The GGSN node of the GPRS and UMTS networks and the P-GW node of the LTE network act as user plane gateways between a mobile network and the external data network 4, providing functions such as e.g. QoS policy enforcing, usage metering, and IP address allocation. All of the networks illustrated in FIG. 1 may also, optionally, include a control plane gateway, such as e.g. a MTC GW currently being standardized. A control plane gateway is intended to act as an entry point in the mobile network for control messages from the servers. The purpose of the control plane gateway is, typically, to protect the network from unauthorised control messages, or control messages sent by unauthorised servers. The control plane gateway may be pre-provisioned in the server, in case the server only communicates with one network operator. Otherwise, the server first needs to determine to which operator a control message such as the trigger message described in the present invention needs to be sent to. Based on the Device ID, Group ID or IMSI, the server should be able to find the correct mobile operator network.

Of course, functionality of a user plane gateway and a control plane gateway could be combined in a single node or distributed among a larger number of nodes than illustrated in FIG. 1.

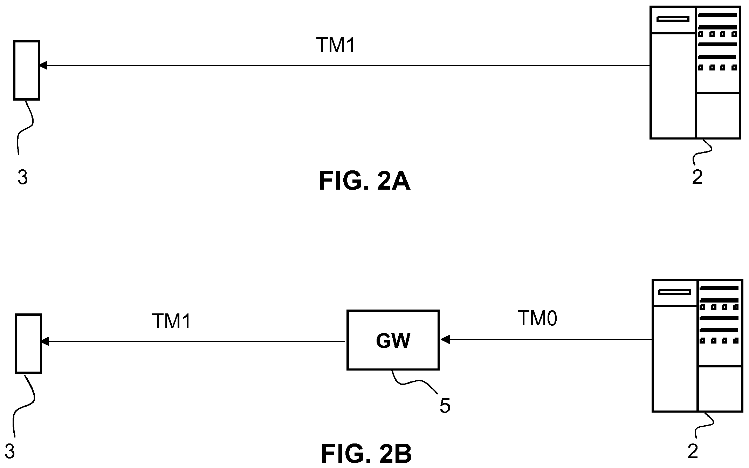

FIGS. 2A-2F are schematic illustrations of providing a trigger message for establishing a data connection between a server and a terminal according to various embodiments of the present invention. For clarity reasons, only the relevant steps of transmitting a trigger message are depicted in FIGS. 2A-2F. Other procedures, e.g. the ones associated with authentication, the actual set up of the data connection and exchange of user data, are not included.

As shown in FIG. 2A, in one embodiment, the server 2 may be configured to generate a trigger message TM1 and transmit it directly to the terminal 3. To that end, the server 2 may include a processing unit for generating trigger messages and a communications module for transmitting trigger messages.

In the context of the server directly transmitting the trigger message to the terminal, the term "directly" is used only to differentiate the embodiment illustrated in FIG. 2A from the embodiments illustrated in FIGS. 2B-2F where the trigger message generated by the server 2 is transmitted through and, possibly, further processed by one or more intermediate network nodes. Thus, in the embodiment illustrated in FIG. 2A the trigger message may be transmitted to the terminal 3 via entities other than the intermediate nodes described in FIGS. 2B-2F, such as e.g. a Cell Broadcast Centre (CBC), or SMS Service Centre (SMS-SC).

The trigger message TM1 is formed by including at least timing information specifying the time at which the terminal 3 should establish the communication path with the server 2. Since at least a part of the communication path includes at least one data connection of a particular type, the timing information specifies when the terminal 3 should start setting up the data connection. In response to receiving the trigger message with the timing information, the terminal 3 would delay establishing the communication path/data connection until a time that the terminal 3 determines on basis of the timing information.

In one embodiment, the timing information could be included in the trigger message in the form of a delay time, e.g. instructing the terminal 3 to delay establishing of the communication path/data connection by one hour (measured e.g. from the time of receipt of the trigger message or from the time stamp indicating when the trigger message was sent by the server 2). For example, the timing information may instruct the terminal 3 to establish the communication path after a delay of 75 seconds or after a delay of 13 min 15 seconds (i.e., the timing information would specify the delay exactly, up to the couple of seconds).

The timing information could also instruct the terminal 3 to establish the communication path at 07:35:35 (i.e. at some specific time).

In another embodiment, the timing information could be in the form of a time window, e.g. instructing the terminal 3 to establish the communication path/data connection between 16:00 and 17:00 or in a smaller time window, between 03:45:15 and 03:45:45.

In yet another embodiment, the timing information could instruct the terminal 3 to select the time at which to establish a communication path/data connection at random. This embodiment may be particularly beneficial in situations when the trigger message is sent to a group of terminals, e.g. using group addressing, where each terminal would randomise the time of response to the trigger message.

One or more of the exemplary illustrations of possible types of timing information provided above could be combined with one another. For example, the embodiment of timing information instructing the terminal 3 to select the time at which to establish a communication path/data connection at random could be combined with providing delay time or window time so that e.g. the timing information may instruct the terminal 3 to select some random time in a particular time window (e.g. random time between 02:00 and 04:00) for establishing a communication path/data connection. In another example, the timing information may instruct the terminal 3 to randomize time for establishing the communication path between now and one hour. Alternatively, the timing information providing both a time delay and a time window is possible where the timing information would indicate the delay together with the duration, instructing the terminal 3 to establish the communication path after a delay of e.g. 15 minutes during the time window of 1 hour. Such an embodiment could be beneficial because, unlike providing absolute time indications, providing time delay and time window information does not require synchronization between all nodes concerned (possibly also taking into account time zones and summer time). In yet another example, the timing information may include two delays, e.g. instructing the terminal to establish the communication path from 15 minutes from now until from 30 minutes from now.

The timing information may be used to spread network load when a trigger is sent to a group of terminals (i.e., the terminals may randomize their load) and/or to spread network load when triggers are sent to individual devices (i.e., the server may randomize the loads of the terminals).

Further, the timing information in the trigger message may instruct the terminal 3 to do something before the terminal 3 would start sending its data to the server 2, e.g. to start recording data and send data after 4 days or to record data between July 1st 13:00 and July 4th 15:00 and then send data.

As the foregoing examples illustrates, timing information could relate to times from a few seconds to multiple days.

Other types of timing information indicating at what time the terminal 3 should or should not establish the communication path/data connection may be envisioned and are intended to be within the scope of the present invention.

The trigger message TM1 could also include information that is typically included in conventional trigger messages, such as the identity of the terminal 3, the identity of the application, and/or a request counter associated to this request allowing to detect duplicated requests, to correlate requests with their acknowledgement and to allow the application to cancel a request. The trigger message TM1 may also, optionally, include the IP address (or Fully Qualified Domain Name) and/or port numbers of the application server 2 with which the terminal 3 is triggered to establish a data connection, an urgency request indication, a validity timer allowing to remove triggers that are stored in the network when the terminal 3 cannot be reached (e.g. with SMS), the area where triggering needs to be sent, and/or a limited amount of application specific information (e.g. to instruct the terminal 3 to do something before establishing a communication path with the server 2).

Upon receiving the trigger message TM1, the terminal 3 is configured to obtain the timing information from the message, then, based on the obtained timing information, determine at which time the communication path with the server 2 should be established, and, finally, establish the communication path at the determined time. To that end, the terminal 3 may include a processing unit capable of extracting the timing information from the trigger message and determining the time when the communication path should be established, and a communications module for establishing the requested communication path. At least part of the functionality of the processing unit and/or the communications module of the terminal 3 may be included within a (U)SIM within the terminal 3.

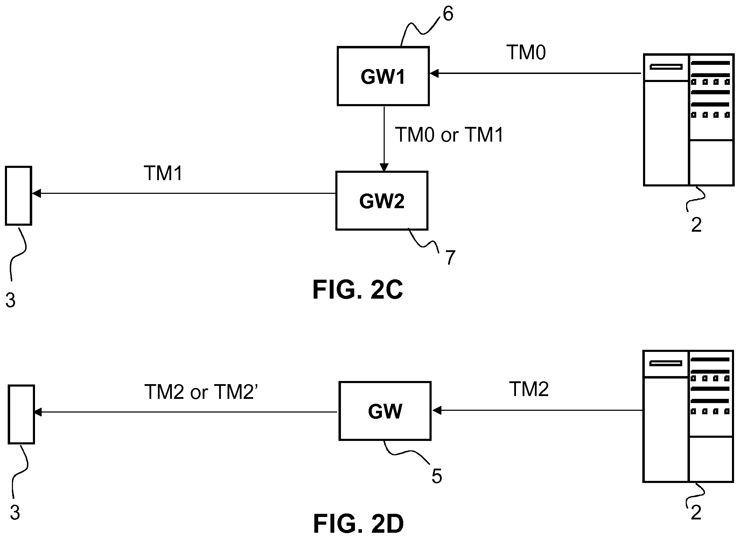

FIGS. 2B and 2C differ from FIG. 2A in that in FIGS. 2B and 2C the server 2 does not include the timing information in the trigger message. Instead, it is some intermediate network node that includes the timing information into the trigger message transmitted to the terminal 3.

In FIG. 2B, the server 2 transmits a trigger message TM0 to the intermediate node 5, such as e.g. GGSN, P-GW, or MTC-GW described above. The intermediate node 5 is communicatively connected to the server 2, either directly or via other intermediate nodes, in that the intermediate node 5 can receive trigger messages from the server 2 (over the external network 4). The intermediate node 5 is also communicatively connected to the terminal 3, either directly or via other intermediate nodes, in that the intermediate node 5 can transmit trigger messages further to the terminal 3, over the mobile network.

In the embodiment illustrated in FIG. 2B, the intermediate node 5 receives from the server 2 the trigger message TM0 that does not include the timing information (i.e. the trigger message TM0 could be a conventional trigger message). The intermediate node 5 is then configured to add the timing information to the trigger message, thus generating a new trigger message TM1, and transmit the trigger message TM1 with the timing information to the terminal 3. The discussions provided above with respect to the trigger message TM1 and the terminal 3 are also applicable here and, therefore, are not repeated.

FIG. 2C differs from FIG. 2B in that two intermediate nodes are used, an intermediate node 6 and an intermediate node 7. The first intermediate node 6 is communicatively connected to the server 2, either directly or via other intermediate nodes, in that the intermediate node 6 can receive trigger messages from the server 2. The first intermediate node 6 is also communicatively connected to the intermediate node 7, either directly or via other intermediate nodes, in that the intermediate node 6 can transmit trigger messages further to the node 7. The intermediate node 7 is communicatively connected to the terminal 3, also either directly or via other intermediate nodes, in that it may, in turn, transmit trigger messages further to the terminal 3.

In the embodiment illustrated in FIG. 2C, either the first intermediate node 6 or the second intermediate node 7 can include the timing information into the trigger message, similar to how it is done by the intermediate node 5 illustrated in FIG. 2B.

In all of the embodiments illustrated in FIGS. 2A-2C, the trigger message may further include connection information specifying the type of at least one data connection that the server 2 needs the terminal 3 to set up as a part of the terminal 3 establishing a communication path between the server 2 and the terminal 3. The connection information could include e.g. a complete or partial QoS profile, a QCI, or some other information that can adequately identify a particular type of data connection. Providing the information indicating the required type of data connection within the communication path before the data connection/communication path has been set up by including that information in the trigger message would allow avoiding having to waste system's resources by setting up a wrong type of connection and then having to correct it, as is currently done in the art.

In such embodiments, upon receiving the trigger message including not only the timing information but also the connection information, the terminal 3 would be configured to obtain the connection information from the message and establish a communication path to the server 2, the communication path comprising the data connection of the type specified in the message.

FIGS. 2D-2F illustrate how one or more intermediate nodes may further assist the server 2 in providing the trigger message to the terminal when the trigger message includes, in addition to timing information, connection information that specifies a type of data connection within the communication path that is supported by and allowed for the terminal.

FIG. 2D illustrates that an intermediate network node 5, such as e.g. GGSN, P-GW or MTC GW, may be included in the communication path between the server 2 and the terminal 3, similar to the intermediate network node 5 described in FIG. 2B.

The intermediate node 5 receives from the server a trigger message TM2 that includes not only the timing information, but also the connection information, as described above.

The intermediate node 5 could then be configured to extract the connection information from the received trigger message TM2 and check whether the particular QoS profile identified by the connection information is supported by the terminal 3 and/or allowed by the subscription of the terminal 3. This may be done by e.g. checking with HSS containing subscriber's information.

If the intermediate node 5 determines that the type of connection identified in TM2 is supported by and allowed for the terminal 3, the intermediate node 5 may transmit the trigger message TM2 further, to the terminal 3. Otherwise, the intermediate node 5 may either stop the transmission of the trigger message to the terminal 3 (possibly communicate to the server 2 that the transmission of the trigger message TM2 has been interrupted), update the trigger message by deleting the connection information from the trigger message, or overwrite the connection information in TM2 specifying the type of connection requested by the server 2 with the most appropriate connection information specifying the type of connection that would be supported by and allowed for the terminal 3. In the last two cases, the intermediate node 5 would then transmit the updated trigger message TM2' to the terminal 3.

For example, the intermediate node 5 may comprise a MTC GW configured to check with HSS to see what the default QoS profile for the subscription of the terminal 3 is and insert the appropriate QoS identification in the subsequent trigger signalling.

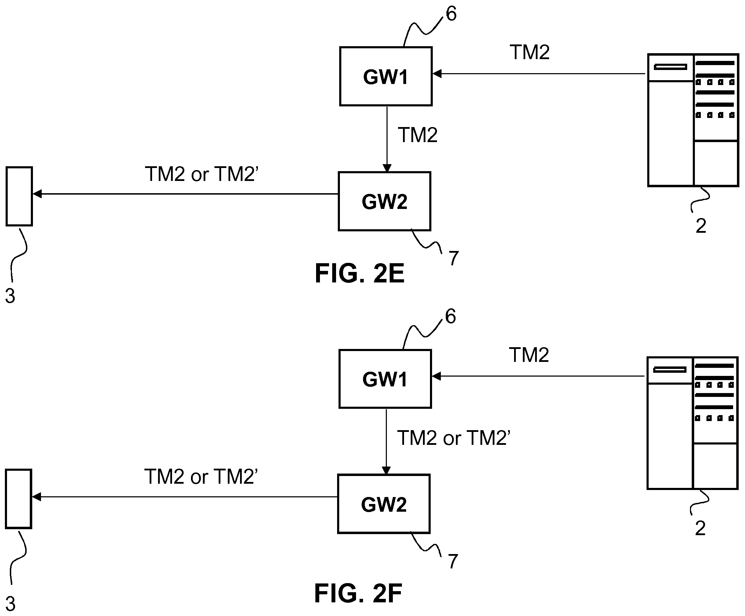

FIGS. 2E and 2F differ from FIG. 2D in that two intermediate nodes are used, similar to the intermediate nodes described in FIG. 2C. The trigger message TM2 transmitted by the server 2, the updated trigger message TM2', the server 2, and the terminal 3 illustrated in FIGS. 2E and 2F are analogous to those illustrated in FIG. 2D and, therefore, their discussion is not repeated here. FIG. 2E differs from FIG. 2D in that two intermediate network nodes are used instead of one, where the first intermediate network node 6 transmits the trigger message TM2 to the second intermediate network node 7 which then is configured to check whether the type of connection requested by the server 2 is supported and/or allowed by the terminal 3. That functionality of the intermediate node 7 is then analogous to that of the intermediate node 5 illustrated in FIG. 2D and, in the interests of brevity, is not repeated here.

A configuration illustrated in FIG. 2E could be advantageous where the first intermediate node 6 is configured to check whether the server 2 is authorised to send messages to the network and to check whether the server 2 is only sending messages it is authorised to send.

In one embodiment, the first intermediate node 6 could include a control plane gateway, such as e.g. MTC GW, while the second intermediate node 7 could include a user plane gateway, such as e.g. P-GW.

FIG. 2F differs from FIG. 2E in that it is already the first intermediate network node 6 that performs the checking of the connection information included by the server 2 in the trigger message TM2, similar to that of the intermediate node 5 illustrated in FIG. 2D. For example, in one embodiment, the intermediate node 6 may comprise HSS, which then may modify QoS information in the received trigger message TM2 based on the subscription information for the terminal 3 and forward the updated trigger message TM2' to the intermediate node 7 which then sends it to the terminal 3. This could be particularly beneficial for triggering via HSS and NAS signalling.

In various embodiments illustrated in FIGS. 2A-2F, the connection information may or may not be included in the trigger message by the same entity that includes the timing information. For example, in the embodiment of FIG. 2B, the connection information could be included into the trigger message by the server 2 while the timing information is added later, by the intermediate node 5. In another example, in the embodiment of FIG. 2A, it is the server 2 that includes the timing information into the trigger message, but it could be some intermediate node, such as e.g. the intermediate node 5 (not shown in FIG. 2A) that adds the connection information to that trigger message.

Similar to the server 2 and the terminal 3, each of the intermediate network nodes 5, 6, and 7 illustrated in FIGS. 2B-2F may include a processing unit for generating and processing trigger messages and other data and a communications module for communicating with the terminal, the server, or other nodes and entities.

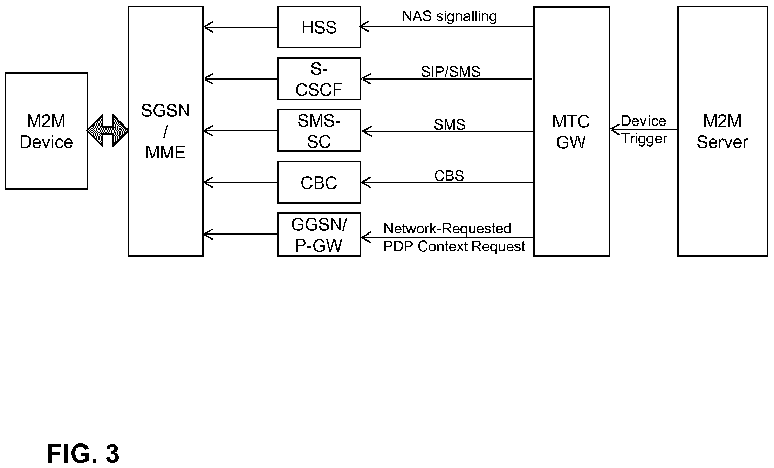

FIG. 3 provides an exemplary illustration of how various trigger messages may be transmitted to a terminal via the control plane gateway, such as e.g. MTC GW, according to various M2M embodiments of the present invention. In FIGS. 3-8, the term "M2M device" is used to identify the terminal 3 described in the remainder of the present description, to point out that these illustrative embodiments are particularly suitable for M2M applications.

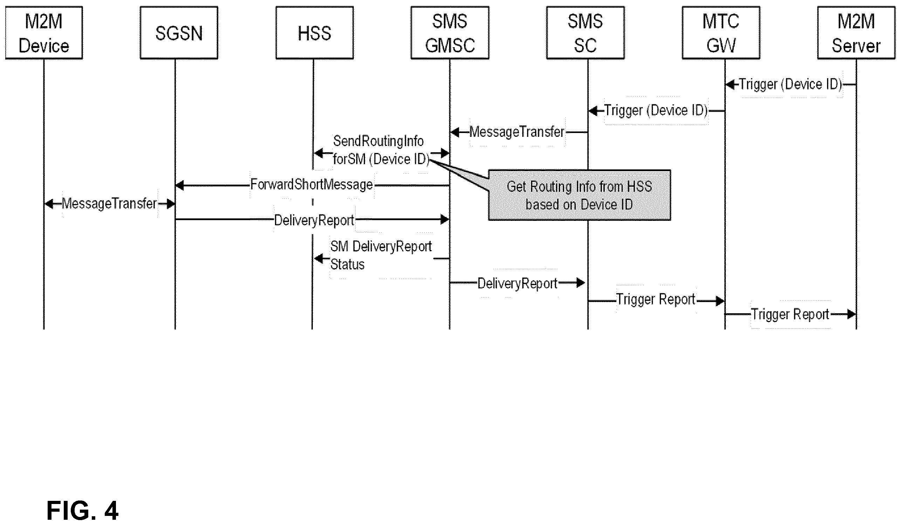

As shown in FIG. 3, from the MTC GW onwards, a number of potential trigger mechanisms exist that could be used in the embodiments of FIGS. 2A-2F. These mechanisms include triggering using mobile terminated SMS, triggering using IMS Message, triggering using cell broadcast, triggering via HSS and NAS signalling, and triggering via Network Requested PDP context establishment, illustrated in greater detail in FIGS. 4-8, respectively.

In one embodiment, the MTC GW may be configured to decide which triggering mechanism to choose, e.g. based on status information from the network. In other embodiments, the M2M server may be the decision point on which trigger method to use. That may be advantageous because the M2M server typically has most knowledge about the particular application, the M2M devices associated with that application, and the kind of triggering mechanisms these devices would support.

In all of the triggering mechanisms illustrated in FIG. 3, the timing information and, optionally, the connection information may be added to the trigger message as described in various embodiments of FIGS. 2A-2F. The various triggering mechanisms are now briefly described in association with FIGS. 4-8, where it is understood that a person skilled in the art would be able to implement one or more of these triggering mechanisms in context of the embodiments of FIGS. 2A-2F.

FIG. 4 illustrates how the trigger message sent by the M2M server is forwarded by the MTC GW to the SMS Service Centre (SMS SC). From there on, the procedure is almost the standard mobile terminated SMS procedure, as described in 3GPP TS 23.040. The main difference is that in normal SMS procedures, a MSISDN is used as the Device Identifier. With M2M communications, either the IMSI or an MSISDN replacement could be used, which implies a change to the SendRoutingInfoforSMS procedure.

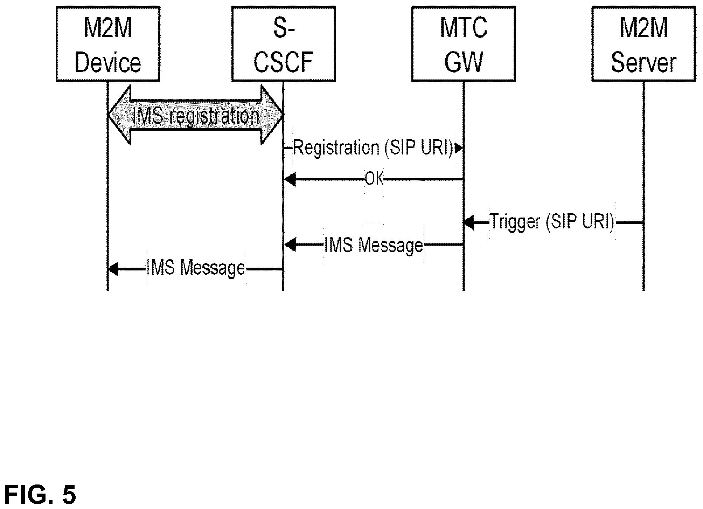

In LTE network, there is no native SMS support and text messaging is implemented using IMS instant messaging. So, where in LTE SMS-based triggering may be difficult, an alternative may be to use SIP Messages. FIG. 5 illustrates how IMS message can be used to trigger a M2M device. First, the M2M device would need to register in IMS, in order to be able to receive IMS Messages. The MTC GW is seen as an IMS Application Server and the registration of M2M devices in the S-CSCSF is forwarded to the MTC GW. When a trigger message is received by the MTC GW, the MTC GW transmits a SIP Message towards the M2M device via the ISC interface with the S-CSCF.

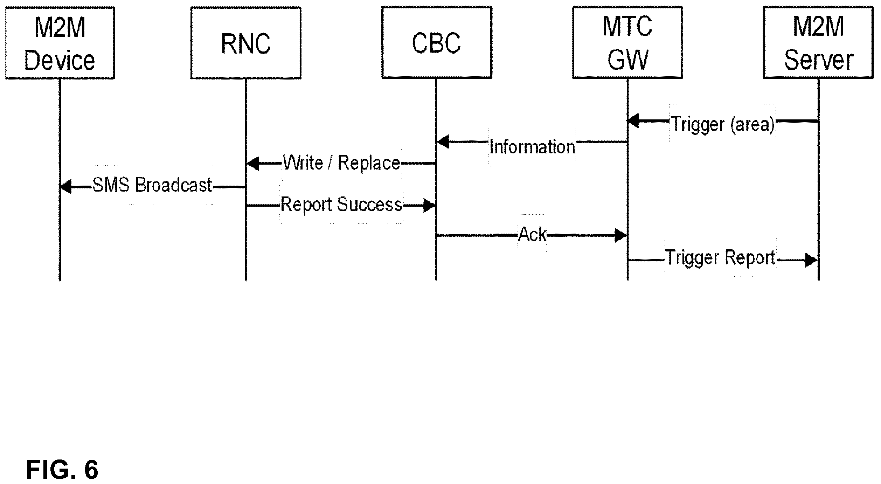

FIG. 6 illustrates triggering using cell broadcast. The assumption behind this solution is that the M2M server has the information as to the area where the M2M device is located. A trigger request with the area is sent to the MTC GW, which forwards it to the Cell Broadcast Centre (CBC). From here on, standard procedures of cell broadcast as described in 3GPP TS 23.041 may be used to broadcast the trigger message within the indicated area. The M2M device listens to the broadcast messages. First the M2M device will determine which broadcast messages are trigger messages. Trigger messages may be identified for example by the broadcast channel identifier or through a specific formatting of the broadcast message. The M2M device may interpret the receipt of any trigger message as a trigger and set up a connection to the M2M server. Alternatively, the M2M device first determines if there is a match between the identification sent in the trigger message and the identification of the M2M device, and, upon a positive match, set up a connection to the M2M server.

The identification used in the trigger message may be any application level identifier and may be completely transparent to the mobile network. For example, a smart metering application could use serial numbers of the electricity meters. The identification in the trigger message may also identify a group of M2M devices. This allows for an efficient way to trigger a batch of M2M devices to do e.g. a software upgrade. In such a case, including the timing information within the trigger message, as described in the present invention, could allow spreading the response to the trigger message out in time and mitigating or preventing that a too large group of M2M devices will try to connect to the M2M server simultaneously.

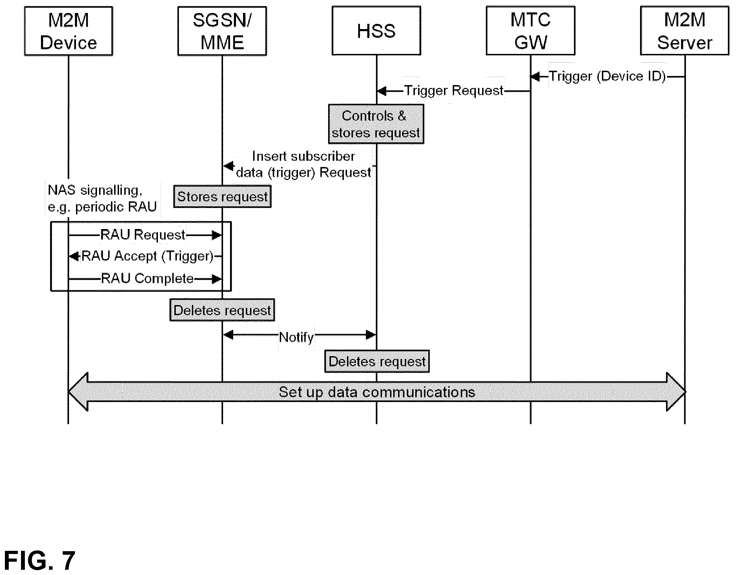

FIG. 7 illustrates a message sequence for triggering using existing Non Access Stratum (NAS) signalling. The idea behind this concept is that the trigger message can be "piggy-backed" by attaching it to the existing signalling messages exchanged between the M2M device and the network. The trigger message is sent via the MTC GW to the HSS. The HSS stores the request and, when the M2M device is attached, sends it in an Insert Subscriber message to the SGSN or MME where the M2M is registered. When the M2M device next signals to the SGSN/MME, e.g. for a periodic routing area update, the SGSN/MME piggy backs the trigger message in the response to the M2M device. When the trigger message is received successfully by the M2M device, the trigger request may be deleted from the SGSN/MME and the HSS. In case the M2M device is not attached, the HSS may store the trigger message until the next time the M2M device attaches to the network again.

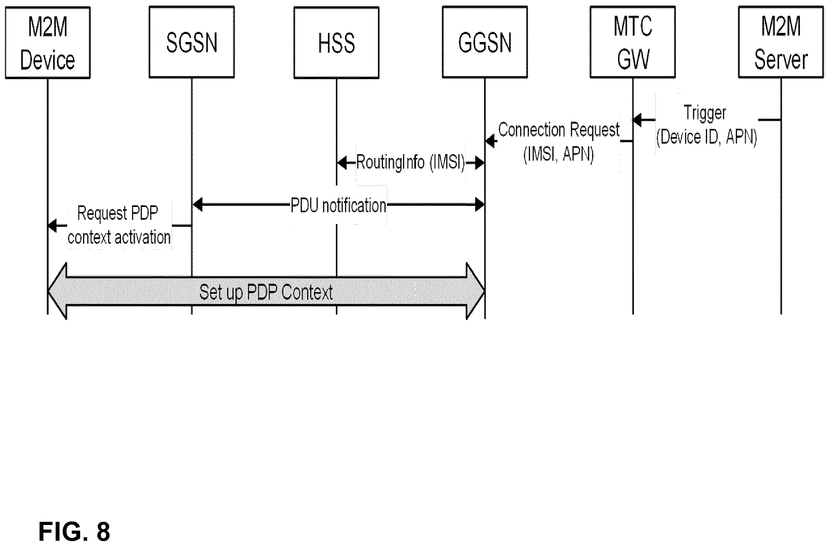

The final of the five trigger mechanisms is illustrated in FIG. 8. The network requested PDP context activation procedure has been specified in 3GPP TS 23.060. The new aspect in this procedure would be the Connection Request from the MTC GW to the GGSN. The existing network requested PDP context activation procedure is not initiated by a signalling message but by the receipt of an IP packet for the device. The Routinglnfo for determination to which SGSN the trigger message should be sent, may be found in the HSS on the basis of the IMSI. It may also be an option to use a new Device ID replacement of the MSISDN to query the HSS.

One embodiment of the invention may be implemented as a program product for use with a computer system. The program(s) of the program product define functions of the embodiments (including the methods described herein) and can be contained on a variety of, preferably non-transitory, computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory, flash memory) on which alterable information is stored. The computer program may be run on the processing units described herein.

### FURTHER EMBODIMENTS ARE DESCRIBED AS FOLLOWS

Triggering with time indicators provides the possibility to allow for communication with devices at moments when those devices are usually in standby mode and this provides the advantage of saving battery life. For example, in order to save battery life, a mobile client might be in suspend mode for the largest part of the day, only waking up at certain moments in time (for example every night at 03:00) during which it listens to the broadcast channel. In some cases, it is useful and advantageous to not only be able to communicate with these devices during these 'waking hours' as such, but also outside these fixed timeslots. An example of this might be if a server is scheduled to communicate with the device at, say, 16:00 to check the status of the device at that time. In order to allow for this scenario, a trigger might be sent to the device during its regularly scheduled waking hours. Included in this trigger would be a time indicator ordering the device to wake up and set up a data connection at 16:00 the following day to allow for communication with the server. The advantage of this embodiment is that it allows for a device to be in power-down mode for the largest part of the day, thereby saving battery life, while maintaining the flexibility of being able to communicate with the device at whatever time period is required by the server, thereby allowing for flexibility of maintenance.

Although triggering itself uses network resources, triggering can be used to reduce costs. Depending on the time of day, triggering a mobile client might be more expensive than at other times. For example, triggering a mobile client during working hours, when there is a lot of network traffic, might be more expensive than triggering the same mobile client during the night, when network load is low. However, in some cases it might be necessary to have a mobile client set up a data connection at a certain or precise point in time, for example to read out the temperature at exactly 12:00 in the afternoon. In this case, including a time indicator in the trigger message might be a cost-efficient solution. In the above example, the server might send the trigger message during off-peak low-cost night hours, but include a time indicator that informs the mobile client to set up a data connection at 12:00 in the afternoon when it would be expensive to send the trigger. Costs are reduced by separating the trigger and the eventual data connection and this allows for a more cost-efficient method of sending triggers to mobile devices.

### Extra embodiment: Communication outside allowed windows

In some cases, a mobile client might only be allowed to contact the network during a specified timeslot (a 'grant access time window'). Outside these timeslots, the mobile client will immediately be rejected once it tries to attach to the network.

One of the drawbacks of this method is that in some cases it might be useful from a server-side perspective to want to communicate with a device outside this specified timeslot. In other words, in some cases the network might want to request a device to disobey the grant access time window that was given to the device by the network. However, if a device knows that it is not allowed to contact the network during a given period of time, it doesn't make sense for the device to have its cellular radio turned on, so it is not possible for the network to notify the mobile client of the request to disobey its grant access time window at a certain instant in time to contact the network.

In this case, a Trigger with Time Indicator might be sent to the mobile client during the time period it is attached to the network (the grant access time window). Included in this trigger might be a time indicator that contains a time outside the mobile client's grant access time window and therefore informs the device that may disobey its grant access time window at that point in time to contact the network.

## Claims

1. A method for a first intermediate network node (5 or 6) for triggering at least one terminal (3) to establish a communication path between the at least one terminal and a server (2), wherein the communication path includes at least one data connection, the method comprising:
receiving a trigger message generated at the server the trigger message including (i) timing information instructing the at least one terminal when the communication path between the at least one terminal and the server is to be established, and (ii) connection information indicating a first type of the at least one data connection;
**characterised by**:
determining whether the first type of the at least one data connection is allowed for the at least one terminal; and
upon positive determination, transmitting the trigger message from the first intermediate network node to the at least one terminal.

2. The method according to claim 1, wherein the timing information includes one or more of a time delay, a time window, and an instruction to randomly select time for establishing the communication path between the at least one terminal and the server.

3. The method according to any one of the preceding claims, wherein the trigger message is transmitted to a plurality of terminals, the plurality of terminals including the at least one terminal.

4. The method according to claim 1, the method further comprising:
determining whether the first type of the at least one data connection is supported by the at least one terminal.

5. The method according to any one of the preceding claims, further comprising:
upon negative determination, updating the trigger message by replacing the information indicating the first type of the at least one data connection with information indicating a second type of the at least one data connection, where the second type of the at least one data connection is supported by the at least one terminal and allowed for the at least one terminal; and
transmitting the trigger message from the first intermediate network node to the at least one terminal after the trigger message has been updated.

6. The method according to any one of the preceding claims, wherein the trigger message is transmitted from the first intermediate network node to the at least one terminal via a second intermediate network node (7) and wherein, optionally, the first intermediate network node comprises a control plane gateway and the second intermediate network node comprises a user plane gateway.

7. The method according to any one of the preceding claims, wherein the data connection comprises a concatenation of tunnels including a first tunnel between the at least one terminal device and a network gateway, wherein the connection information indicates the first type of the at least one data connection for at least the first tunnel between the at least one terminal device and the network gateway.

8. A first intermediate network node (5 or 6) communicatively connected to a server (2) and to at least one terminal (3), **characterised by** comprising means configured for performing the method according to one or more of claims 1-6.

9. The first intermediate network node according to claim 8, the first intermediate network node being a control plane gateway or a user plane gateway.

10. A computer program comprising software code portion **characterised by** being configured, when executed by a processor, for performing the steps of at least one of claims 1-7.

## Patentansprüche

1. Verfahren für einen ersten Zwischennetzwerkknoten (5 oder 6) zum Auslösen von mindestens einem Endgerät (3) zum
Herstellen eines Kommunikationspfads zwischen dem mindestens einen Endgerät und einem Server (2), wobei der Kommunikationspfad mindestens eine Datenverbindung enthält, das Verfahren umfassend:
Empfangen einer Auslösenachricht, die auf dem Server erzeugt wird, wobei die Auslösenachricht (i) eine Zeitsteuerinformation, die das mindestens eine Endgerät anweist, wann der Kommunikationspfad zwischen dem mindestens einen Endgerät und dem Server eingerichtet werden soll, und (ii) eine Verbindungsinformation enthält, die einen ersten Typ der mindestens einen Datenverbindung angibt;
**gekennzeichnet durch**:
Bestimmen, ob der erste Typ der mindestens einen Datenverbindung für das mindestens eine Endgerät zulässig ist; und
bei positiver Bestimmung, Übertragen der Auslösenachricht von dem ersten Zwischennetzwerkknoten an das mindestens eine Endgerät.

2. Verfahren nach Anspruch 1, wobei die Zeitsteuerinformation eines oder mehrere von einer Zeitverzögerung, einem Zeitfenster und einer Anweisung zum zufälligen Auswählen der Zeit zum Herstellen des Kommunikationspfads zwischen dem mindestens einen Endgerät und dem Server enthält.

3. Verfahren nach einem der vorhergehenden Ansprüche, wobei die Auslösenachricht an eine Vielzahl von Endgeräten übertragen wird, wobei die Vielzahl von Endgeräten das mindestens eine Endgerät enthalten.

4. Verfahren nach Anspruch 1, das Verfahren ferner umfassend:
Bestimmen, ob der erste Typ der mindestens einen Datenverbindung durch das mindestens eine Endgerät unterstützt wird.

5. Verfahren nach einem der vorhergehenden Ansprüche, ferner umfassend:
bei negativer Bestimmung, Aktualisieren der Auslösenachricht durch Ersetzen der Information, die den ersten Typ der mindestens einen Datenverbindung angibt, mit einer Information, die einen zweiten Typ der mindestens einen Datenverbindung angibt, wobei der zweite Typ der mindestens einen Datenverbindung durch das mindestens eine Endgerät unterstützt wird und für das mindestens eine Endgerät zulässig ist; und
Übertragen der Auslösenachricht von dem ersten Zwischennetzwerkknoten an das mindestens eine Endgerät, nachdem die Auslösenachricht aktualisiert wurde.

6. Verfahren nach einem der vorhergehenden Ansprüche, wobei die Auslösenachricht von dem ersten Zwischennetzwerkknoten an das mindestens eine Endgerät über einen zweiten Zwischennetzwerkknoten (7) übertragen wird und wobei optional der erste Zwischennetzwerkknoten einen Steuerungsebenen-Gateway umfasst und der zweite Zwischennetzwerkknoten einen Benutzerebenen-Gateway umfasst.

7. Verfahren nach einem der vorhergehenden Ansprüche, wobei die Datenverbindung eine Verkettung von Tunneln umfasst, die einen ersten Tunnel zwischen dem mindestens einen Endgerät und einem Netzwerk-Gateway enthält, wobei die Verbindungsinformation den ersten Typ der mindestens einen Datenverbindung für mindestens den ersten Tunnel zwischen dem mindestens einen Endgerät und dem Netzwerk-Gateway angibt.

8. Erster Zwischennetzwerkknoten (5 oder 6), der kommunikativ mit einem Server (2) und mit mindestens einem Endgerät (3) verbunden ist, **dadurch gekennzeichnet, dass** er Mittel umfasst, die zum Durchführen des Verfahrens nach einem oder mehreren der Ansprüche 1 bis 6 konfiguriert sind.

9. Erster Zwischennetzwerkknoten nach Anspruch 8, wobei der erste Zwischennetzwerkknoten ein Steuerungsebenen-Gateway oder ein Benutzerebenen-Gateway ist.

10. Computerprogramm mit einem Softwarecodeabschnitt, **dadurch gekennzeichnet, dass** er konfiguriert ist, um bei Ausführung durch einen Prozessor die Schritte von mindestens einem der Ansprüche 1 bis 7 durchzuführen.

## Revendications

1. Procédé pour qu'un premier noeud intermédiaire (5 ou 6) de réseau déclenche l'établissement par au moins un terminal (3) d'un trajet de communication entre le terminal ou les terminaux et un serveur (2), le trajet de communication comprenant au moins une connexion de données, le procédé comportant les étapes consistant à :
recevoir un message de déclenchement généré au niveau du serveur, le message de déclenchement comprenant (i) des informations de rythme donnant au terminal ou aux terminaux une consigne d'instant où le trajet de communication entre le terminal ou les terminaux et le serveur doit être établi, et (ii) des informations de connexion indiquant un premier type de la ou des connexions de données ;
**caractérisé par** les étapes consistant à :
déterminer si le premier type de la ou des connexions de données est autorisé pour le terminal ou les terminaux ; et
suite à une détermination positive, envoyer le message de déclenchement du premier noeud intermédiaire de réseau au terminal ou aux terminaux.

2. Procédé selon la revendication 1, les informations de rythme comprenant un ou plusieurs éléments parmi un retard temporel, une fenêtre temporelle, et une instruction de sélection aléatoire d'un instant d'établissement du trajet de communication entre le terminal ou les terminaux et le serveur.

3. Procédé selon l'une quelconque des revendications précédentes, le message de déclenchement étant envoyé à une pluralité de terminaux, la pluralité de terminaux comprenant le terminal ou les terminaux.

4. Procédé selon la revendication 1, le procédé comportant en outre l'étape consistant à :
déterminer si le premier type de la ou des connexions de données est pris en charge par le terminal ou les terminaux.

5. Procédé selon l'une quelconque des revendications précédentes, comportant en outre les étapes consistant :
suite à une détermination négative, à actualiser le message de déclenchement en remplaçant les informations indiquant le premier type de la ou des connexions de données par des informations indiquant un second type de la ou des connexions de données, le second type de la ou des connexions de données étant pris en charge par le terminal ou les terminaux et autorisé pour le terminal ou les terminaux ; et
envoyer le message de déclenchement du premier noeud intermédiaire de réseau au terminal ou aux terminaux après que le message de déclenchement a été actualisé.

6. Procédé selon l'une quelconque des revendications précédentes, le message de déclenchement étant envoyé du premier noeud intermédiaire de réseau au terminal ou aux terminaux via un second noeud intermédiaire (7) de réseau et, éventuellement, le premier noeud intermédiaire de réseau comportant une passerelle de plan de commande et le second noeud intermédiaire de réseau comportant une passerelle de plan d'utilisateur.

7. Procédé selon l'une quelconque des revendications précédentes, la connexion de données comportant une concaténation de tunnels comprenant un premier tunnel entre le ou les dispositifs terminaux et une passerelle de réseau, les informations de connexion indiquant le premier type de la ou des connexions de données pour au moins le premier tunnel entre le ou les dispositifs terminaux et la passerelle de réseau.

8. Premier noeud intermédiaire (5 ou 6) de réseau relié de façon communicative à un serveur (2) et à au moins un terminal (3), **caractérisé en ce qu'**il comporte des moyens configurés pour réaliser le procédé selon une ou plusieurs des revendications 1 à 6.

9. Premier noeud intermédiaire de réseau selon la revendication 8, le premier noeud intermédiaire de réseau étant une passerelle de plan de commande ou une passerelle de plan d'utilisateur.

10. Programme d'ordinateur comportant une portion de code logiciel **caractérisée en ce qu'**elle est configurée, lorsqu'elle est exécutée par un processeur, pour réaliser les étapes d'au moins une des revendications 1 à 7.
